# EUROPEAN PATENT APPLICATION

(11) **EP 2 868 864 A1**
(43) Date of publication of application: **06.05.2015**
(21) Application number: 13191486.3
(22) Date of filing: 04.11.2013
(51) Int. Cl.: F01D 1/36, F02K 1/78, F02K 7/10

(54) **Axial fluid machine and method for power extraction**

(71) Applicant: Institut von Karman de Dynamique des Fluides, AISBL, 1640 Rhode Saint Genèse (BE)
(72) Inventor: Da Costa Vinha, Nuno Filipe, 1640 Rhode Saint Genèse (BE); Paniagua, Guillermo, 1640 Rhode Saint Genèse (BE); Lopes de Sousa, Jorge Fernandes, 1640 Rhode Saint Genèse (BE); Saracoglu, Bayindir Huseyin, 1640 Rhode Saint Genèse (BE)
(74) Representative: Callewaert, Koen

(57) **Abstract**

A method and a device for power extraction by means of an axial fluid machine, in an annulus tube comprising at least a rotatable inner wall (308, 408, 501) and/or a rotatable outer wall (409, 502) over which a swirling fluid is flowing with a velocity (420). According to this method, the said fluid creates tangential force (417) on at least one of said rotatable walls (308, 408, 501 and 502) of the axial fluid machine and creates power of that said shaft (309, 414, 505 and/or 506).

## Description

### TECHNICAL FIELD

The present invention relates to a method for power extraction by means of an axial fluid machine.

### BACKGROUND

A turbine is a class of fluid machinery that allows extracting continuously mechanical energy through an expansion process of a working fluid. Turbines comprise a plurality of airfoils or blades that define a flow passage. The pressure difference between the two sides of the airfoil or blades generates a pressure force, responsible for the torque transmitted to the shaft of the machine.

Supersonic turbines deliver more power per unit of volume. However highly supersonic passages are not used in conventional fluid machinery because of the high losses related to both shock waves and starting problems in supersonic ducts. No public literature exists about the design and performance of turbines operating at high supersonic axial inlet flows. There is, nonetheless, experience on rotor airfoils exposed to supersonic conditions however with an axial subsonic component, both for turbines and compressors. Lichtfuss H. J. and Starken H., in "Supersonic cascade flow", Progress of Aerospace Science. Vol. 15, pp. 37-149, 1974, showed that the combination of supersonic inlet and subsonic axial velocity flow conditions, characteristic of such rotor airfoils, imposes the condition of unique incidence angle that limits operating range of the flow passages. In the 1970's Breugelmans, Gallus and Wennerstrom conducted experiments with supersonic compressor stages achieving pressure ratios between 2.8 and 3.5 for a single stage. Recently Ramgen in the USA has developed an axial supersonic compressor stage delivering a pressure ratio of 7.8. First attempts to design supersonic turbines were made for the high-pressure stages of industrial steam turbines on 1920s. However, due to the incapability of handling the high steam temperatures at the outlet of the turbine, the research was discontinued until the mid-century. Around 1950s the supersonic turbine research was reinitiated for steam turbines, jet and rocket propulsion. Supersonic turbines attracted interest from the industry due to the high specific power they could provide, allowing a reduction on the number of low-pressure stages, thus leading to lighter turbines together with lower production and operational costs. Verneau A., in "Supersonic Turbines for Organic Fluid Rankine Cycles from 3 to 1300 kW," von Karman Institute Lecture Series on "Small High Pressure Ratio Turbines", June 1987, presented supersonic turbines designed for solar power plants, waste energy recovery and energy extraction from the exhaust gas of internal combustion engines. Jergeus H, in "Aerodynamic Design and Test Performance of Supersonic Turbines for The Vulcain Rocket Engines", von Karman Institute Lecture Series on "Small High Pressure Ratio Turbines", June 1987, and Wahlen U., in "The aerodynamic design and testing of a supersonic turbine for rocket engine application," in 3rd European Conference on Turbomachinery: Fluid dynamics and Thermodynamics, (London, United Kingdom), March 1999, presented the LH2 and LOX supersonic turbines for the Vulcain rocket engine. Verdonk G. and Dufournet T., in "Development of a Supersonic Steam Turbine with a Single Stage Pressure Ratio of 200 for Generator and Mechanical Drive," Von Karman Institute Lecture Series on "Small High Pressure Ratio Turbines", June 1987, described a turbo-generator comprising a single stage supersonic turbine. All aforementioned supersonic turbine stages include a converging-diverging nozzle followed by a straight suction surface section in order to achieve uniform relative supersonic flow conditions at the inlet of a very low reaction rotor. According to Goldman L, in "Turbine Design and Applications," ch. 9 - Supersonic Turbines. NASASP-290, 1994, in order to achieve minimum shock losses in the supersonic flow domain, the entire flow turning should be done in the converging part upstream of the throat. The supersonic stators were designed using the method of characteristics coupled with integral boundary layer calculations to ensure shock free flow field as described by Goldman. L and Vanco M., in ."Computer program for design of two-dimensional sharp-edged-throat supersonic nozzles with boundary-layer correction," NASA TM X-2343, 1971. All past supersonic design attempts experienced reduced operability due to: supersonic starting problem; shock wave boundary layer interactions; unique incidence condition.

In radial turbines, the use of shear stress to extract power with series of rotating disks was proposed by Tesla N., in GB191024001 (A).

### STATE OF THE ART

Recent progress on supersonic combustion processes has stirred interest on novel thermal cycles for power generation and air transport. A fundamental challenge in the practical implementation of energy conversion based on those novel cycles is the lack of fluid machinery adequate to cope efficiently with the combustor exit supersonic flows. The interaction of conventional bladed turbomachinery with supersonic pulsating conditions provided by a detonation based combustor has been numerically investigated by Van Zante D., Envia E., Turner M., in "The attenuation of a detonation wave by an aircraft engine axial turbine stage," in 18th ISABE Conference, (Beijing, China), September 2007. ISABE 2007-1260" demonstrating an unacceptably deficient aerodynamic performance of such fluid machinery designs.

Integration of aero-engines with detonation based combustion has been proposed in the US Patent 7,328,570, where a turbofan uses a rotating pulse-detonation system, rather than high and/or low pressure turbines, to drive the fan and the compressor. Several tubes are detonated in a sequential manner and the tube turning allows for the generation of a torque. The outlet condition of such configuration presents a pulsating supersonic characteristic with the existence of strong shock waves. Additionally, the flow exhibits a certain amount of swirl due to the turning produced by the pulse detonation tubes. These extreme flow conditions preclude any conventional fluid machine of being included downstream of such system.

Due to the operability constrains of pulse detonation engines and its difficult integration into propulsion systems, the EP 2525071 A1 patent proposes the use of a Continues Detonation Wave Engine for aerospace application. In this different type of combustion concept the fresh mixture is continually injected into an annular combustor and a series of detonation fronts spin at high frequency, producing a hot gas that is expelled at supersonic speeds in a pulsating manner. The outlet is also characterized by the presences of oblique shock waves that are propagated downstream of the combustor and the possible existence of a tangential velocity component.

### SUMMARY OF THE INVENTION

The purpose of the present invention is to extract energy from a fluid flow by means of an axial machine. The working fluid is a high speed fluid that is confined by an axially arranged annular duct. The said working fluid presents a rotational motion (swirl) around the axis of the duct and it is responsible for the generation of drag forces arising from the viscous interaction on the interface the between the fluid and the annular walls. The generated force is essentially characterized by a tangential component that provides rotation to the annular walls of the duct. Such configurations allows the generation of a certain amount of torque that is transmitted to at least one shaft. A supersonic working fluid with the associated shock waves enhances the drag forces on the walls which are usually perceived as a negative effect for efficient operation. However, we can exploit that effect as an alternative way to extract power by converting the viscous forces generated in the contact surface between the working fluid and the solid walls into a rotational motion of the duct surrounding the fluid.

Recent configurations of combustion chambers deliver supersonic outflow conditions (detonation based engines and scramjet combustors). However, thermo-mechanical constraints imposed by such extreme output conditions prevent the implementation of the traditional bladed turbine. Nonetheless, the available tangential shear stress offers the opportunity to implement the present invention by the efficient extraction of these forces by a rotating annular duct. Such concept design would be lighter, simpler, and easier to clean. Considering that, in a bladed machine, a substantial fraction of the compressor mass flow is diverted for cooling/purging purposes of the blades itself, the present invention would lead to substantial coolant reduction, which can enhance the engine performance, and reduce the emissions.

The present invention also relates to gas turbines and jet engines comprising a supersonic/transonic turbine stage, as well as to vehicles, such as aircraft or ships, powered by such gas turbines or jet engines, power generation plants and gas pipeline pumping stations.

The invention relates in particular, to an axial fluid machine to extract mechanical power from a working fluid comprising a concentric annular duct, wherein said working fluid is injected at an inlet port, travels through the said concentric annular duct confined by an inner wall and an outer wall with at least one axial velocity component and one tangential velocity component wherein viscous interactions occur exclusively between the said working fluid and the said inner wall and said outer wall, wherein said viscous interactions are responsible for the generation of a viscous drag force wherein its tangential component is converted into torque due to the rotational motion of the said inner end-wall and/or said outer end-wall, and leaves the said axial fluid machine through an outlet/exhaust port.

Said working fluid is, for example, a plasma, gas, liquid or a heterogeneous combination of them.

Advantageously, said inner wall and said outer wall have a smooth surface or a surface rough (distributed or localized), porous, dimpled, wavy or a heterogeneous combination of them that modify the said viscous interactions between the said working fluid and the said inner wall and said outer wall.

According to a particular embodiment of the invention, said working fluid has time-dependent or time-independent thermo-aerodynamic properties that modify the said viscous interactions between the said working fluid and the said inner wall and said outer wall. In particular, shock waves in steady or unsteady behavior will interact with the boundary layer at the rotor surface, the inner and/or outer wall. These shock waves thus modify the viscous interaction of the working fluid with the respective wall or rotor surface.

Said inner wall and/or said outer wall are preferably connected to a shaft.

The inner wall and/or said outer wall rotate, in an advantageous manner, in the direction of the tangential viscous drag force component with said inner wall and/or said outer wall velocity lower than the tangential velocity component of the said working fluid.

The invention also relates to a method for extracting power from a working fluid wherein the motion of the working fluid over the walls develops frictional forces that are responsible for the generation of a torque that is transmitted to at least one shaft.

In this method, the presence of shock waves (418) in said working fluid, advantageously, enhances the viscous interactions between the said working fluid and said walls.

In a particular embodiment of the invention, combustion occurs within the rotating walls.

The invention also relates to jet/rocket engines, incorporating a subsonic and/or supersonic combustor, with deflagration and/or detonation.

In a particular application of the invention, the axial fluid machine is integrated into energy production systems, incorporating a subsonic and/or supersonic combustor, with deflagration and/or detonation.

Other details and particular features of the invention emerge from the attached claims and from the description below.

### BRIEF DESCRIPTION OF THE DRAWINGS

Figure 1 shows schematically a prior art supersonic turbine meridional cross section, comprising a set of rotor blades mounted on a rotor and a diverging cross section;
Figure 2 shows schematically a set of rotor blades exposed to supersonic flow field and generation of leading edge and trailing edge shock waves in a prior art supersonic turbine rotor.
Figure 3 shows schematically a first embodiment of an axial fluid machine according to the invention, with a cross section of a diverging flow passage of Figure 1 comprising a lower wall free to rotate;
Figure 4 shows schematically a second embodiment of an axial fluid machine, according to the invention, with a rotating inner wall section on which fluid can exert viscous drag force with an axial and a tangential component; and
Figure 5 shows schematically a third embodiment of an axial fluid machine according to the invention, with the cross section of the axial fluid machine flow passages comprising free to rotate lower and upper walls driven by the fluid force.

### DETAILED DESCRIPTION

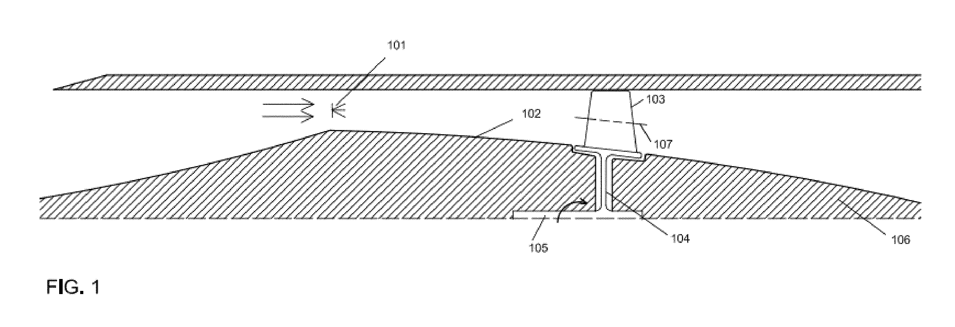

An example of a prior art axial turbine stage is illustrated in Figure 1. In this turbine, the fluid coming from the upstream section 101 turns through a contoured section of an annulus upstream part 102. The fluid travels through a plurality of profiled blades 103, creates lift on the blades 103 and results in rotational movement of rotor 104 around shaft 105. This movement is converted to the shaft power by the rotation of shaft 105. The fluid leaving the turbine blade passages continues to travel through the contoured annulus' downstream part 106.

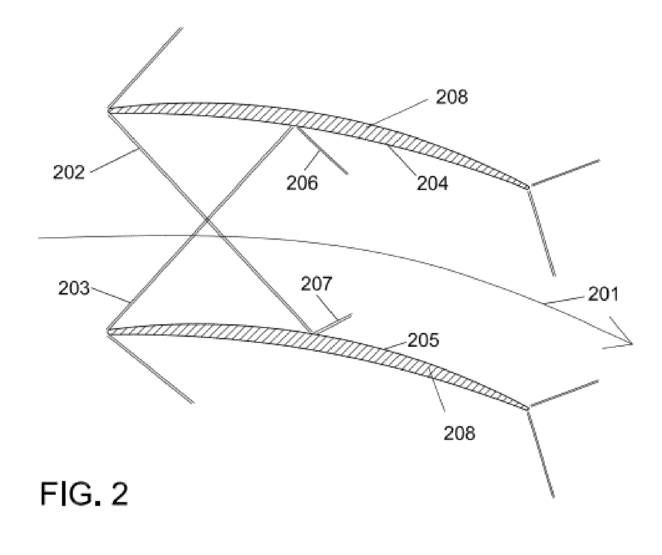

Figure 2 illustrates schematically the flow field around that said prior art axial turbine stage exposed to supersonic flow at the cross section 107 illustrated in Figure 1. A fluid travelling along the flow path 201 with supersonic speed enters the flow passage between the rotor blades 208. Two shock waves 202 and 203 are created at the leading edge of that said blades 208 due to the blockage effect exerted by the blades. The total pressure of the fluid is reduced across that said shock waves 202 and 203. Shock waves 202 and 203 propagate into the passage, impact on the blade surfaces 204 and 205 and reflected shock waves 206 and 207 are created and propagate further downstream. That said impact of that said shock waves 202 and 203 result in boundary layer disturbance and separation of said fluid from said blade surfaces 204 and 205. That said separation result in pressure loss and blockage on that said flow path 201 that results in chocking of the flow passage. The accumulation of the effects of that said shock waves 202, 203, 206 and 207 result in severe efficiency drop in the prior art axial turbine stage exposed to supersonic streams.

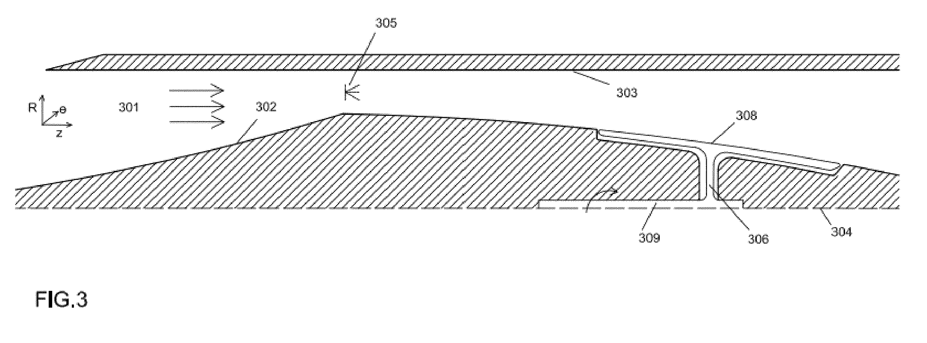

Figure 3 illustrates a cross sectional view of a first embodiment of the axial fluid machine according to the invention, assembled in a high speed axisymmetric propulsion engine. The working fluid when entering the engine at its annular inlet 301 becomes confined by a concentric wall with a smaller radius 302, relative to the engine axis 304, and a second concentric wall with a higher radius 303. The working fluid then enters axially (parallel to the axis of the engine (z-direction)) into the combustor 305 where heat is added to the fluid. A certain amount of rotational movement around the axis 304 may be provided to the fluid during the combustion process. This rotation is characterized by at least two velocity components, one parallel (z-direction) and another perpendicular (θ-direction) to the axis 304. Particular combustor configurations provide, at its outlet, supersonic velocities with several shock waves that follow the rotational movement of the fluid, around the axis 304. The magnitude and direction of the velocity can be time dependent imposing an unsteady characteristic to the fluid. The said working fluid then interacts with the present invention through the contact with the inner wall 308. This annular part inner wall 308 is assembled into a rotor 306 with a rotor surface providing a rotational freedom around the axis 304. The tangential velocity component perpendicular to the axis 304 (θ-direction) exerts a tangential frictional force on the lower radius wall 308, in particular on the rotor surface, that results in the rotation of the rotor 306. Such momentum generates power that is transmitted to shaft 309. The design of the walls, in particular of the rotor surface, in section 308 may be concave, convex, straight or a combination of them.

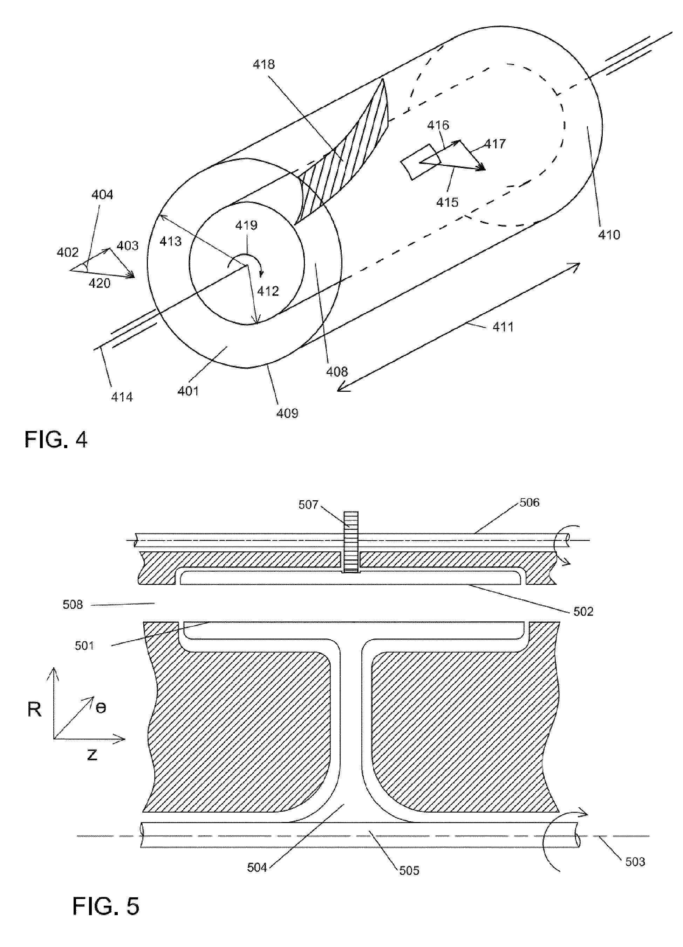

As a second form of embodiment, Figure 4 shows a concentric annular duct that defines the axial fluid machine according to the invention. This duct may be suitable for the transport of a certain fluid, which can be plasma, gas, liquid or a heterogeneous combination of them, providing the advantage of power generation. A swirling fluid flow with a velocity 420 enters the axial machine at the inlet section 401 with an axial velocity component 402 that may be greater than the local speed of sound, along with a certain tangential flow component represented by 403. The magnitude of this inflow tangential component 403 depends on the absolute inlet flow angle 404 measured from the axial direction 402, as well as on the magnitude of the inflow axial component 402. The fluid travels then along the axial machine bounded by the inner wall 408 and the outer wall 409, and leaves the duct through the outlet section 410. In the embodiment of Figure 4 both walls are axially arranged and the duct keeps a constant annular cross-section along the length 411 of the axial fluid machine. The inner wall is thus defined by a constant radius 412 lower than the outer wall radius 413. In the case where the inner wall 408, forming a rotor surface, rotates about its axis of symmetry 414, the relative motion between the said swirling fluid flow and this rotating wall, forming a rotor surface, is responsible for the generation of viscous shear stress 415, providing energy to the said rotating wall. The shear stress has an axial component 416 and a tangential component 417 in the direction of the wall's rotation 419. The tangential component 417 creates tangential shear drag force on the rotating wall 408. That said shear drag force creates torque around the rotating shaft 414 of the axial fluid machine, allowing the extraction of power from the present embodiment. Moreover, the said swirling fluid flow may present a shock-wave pattern 418 inside the duct, moving in both axial and tangential direction, further enhancing the development of tangential shear forces on the walls 408 and 409.

Figure 5 illustrates schematically a detailed cross sectional view of a third embodiment of the axial fluid machine according to the invention. The fluid enters the machine in the annular section 508 with at least two velocity components, one perpendicular (θ-direction) and one parallel (z-direction) to the axis of the machine 503. The axial fluid machine comprises a lower wall 501 with a rotor surface free to rotate around the rotational axis 503. Due to the velocity component in θ-direction and perpendicular the axis of the machine 503, this configuration allows the extraction of the tangential force from the fluid. The torque generated due to the rotational motion is transmitted to the shaft 505 by means of a connecting rotor 504. The present embodiment can additionally or exclusively extract power from the working fluid by using a rotor surface present in the upper wall 502 that is free to rotate around the axis 503. The torque due to the rotational motion of the rotor surface in said upper wall 502 is delivered to a shaft 506 by a connection element 507. The drag forces on the walls 501 and 502, in particular in the respective rotor surfaces, responsible the generation of power, can be enhanced by the presence of distributed or localized roughness on the surface of the said walls. Additionally a porous, dimpled or wavy surface may contribute to improve the viscous interactions between the said working fluid and the said walls.

In the above embodiments of the invention, the axial fluid machine, preferably, comprises a combustor that is situated in the annular duct upstream of said rotor surface. Through the presence of such a combustor, heat is added to the working fluid causing expansion of the fluid.

Such a combustor may comprise an injector for injecting fuel into the working fluid if required. Further, an ignition system for the working fluid, that possibly contains said fuel, is preferably present upstream from said rotor surface for initiating combustion of the working fluid or of said fuel. Suitable ignition systems are well known to the person skilled in the art.

Further, the cross-section of the annular duct can be constant, such as illustrated in Fig. 4 and Fig. 5, or it may diverge or converge. As illustrated in Fig. 3, the cross-section of the annular duct can converge gradually up to the combustor 305 and diverge downstream from this combustor. The diverging cross section permits, for example, expansion of the working fluid.

## Claims

1. Axial fluid machine to extract power from a working fluid to drive a shaft, comprising
- an annular duct with a central axis confined by an inner wall (308, 408, 501) and a concentric outer wall (409, 502), having an inlet port (301, 401, 508) at a first end of said duct for injecting said working fluid and an exhaust port (410) at an opposite end of said duct;
- at least one rotor coaxial with said annular duct and having a rotor surface that is substantially flush with said inner wall or said outer wall such that said inner wall or said outer wall is at least partly formed by said rotor surface, wherein this rotor is operatively connected to a shaft for transmitting rotational movement to this shaft;
**characterized in that** a free space is extending over at least 75% of the distance between said rotor surface and an opposite inner wall or outer wall of said annular duct.

2. Axial fluid machine according to claim 1, wherein said rotor surface is bladeless.

3. Axial fluid machine according to claim 1 or 2, wherein said rotor surface has a surface texture that is smooth, rough (distributed or localized), porous, dimpled, wavy or any combination of such surface textures, to modify viscous interactions between the said working fluid and said rotor surface.

4. Axial fluid machine according to any of claims 1 to 3, wherein said rotor surface is provided in said outer wall of the annular duct, wherein a free side of the rotor surface is facing said inner wall.

5. Axial fluid machine according to any of claims 1 to 4, wherein said rotor surface is provided in said inner wall of the annular duct, wherein a free side of the rotor surface is facing said outer wall.

6. Axial fluid machine according to any of claims 1 to 5, wherein at least a first rotor is provided which has a rotor surface extending along said inner wall, and wherein at least a second rotor is provided with has a rotor surface extending along said outer wall.

7. Axial fluid machine according to any of claims 1 to 6, wherein upstream from said rotor surface said annular duct comprises at least an injector for a fuel and, preferably, an ignition system for initiating combustion of the working fluid comprising said fuel.

8. Axial fluid machine according to any of claims 1 to 7, being integrated into jet and/or rocket engines, incorporating a subsonic and/or supersonic combustor, with deflagration and/or detonation.

9. Axial fluid machine according to any of claims 1 to 7, being integrated into an energy production systems, incorporating a subsonic and/or supersonic combustor, with deflagration and/or detonation.

10. Method for extracting power from a working fluid wherein a flow of a working fluid is generated through an annular duct, with a central axis, from an inlet port towards an exhaust port between an inner wall and a concentric outer wall of the annular duct along an axial direction of the duct,
said flow having at least an axial velocity component along said axial direction and a tangential velocity component, wherein viscous interactions occur between said working fluid and at least one rotor surface extending flush with said inner wall and/or said outer wall when the working fluid travels through said annular duct,
wherein said viscous interactions generate a viscous drag force onto said rotor surface such that said tangential velocity component is converted into a rotational motion of said rotor surface around said central axis while said working fluid travels through said annular duct,
wherein said working fluid subsequently leaves said annular duct through said exhaust port,
wherein at least one driving shaft is powered by the rotational motion of said rotor surface.

11. Method according to claim 10, wherein said working fluid is plasma, gas, liquid or a heterogeneous combination of them.

12. Method according to claim 10 or 11, wherein said working fluid, having a tangential velocity component, generates a tangential viscous drag force component (417) that is acting on said rotor surface such that the latter is rotating at a tangential velocity that is lower than the tangential velocity component (403) of said working fluid.

13. Method according to any of claims 10 to 12, wherein said working fluid flows over said rotor surface in order to develop frictional forces between the rotor surface and the working fluid such that a torque is generated that is transmitted to said driving shaft.

14. Method according to any of claims 10 to 13, wherein shock waves (418) are generated in said working fluid to enhance viscous interactions between said working fluid and said rotor surface.

15. Method according to any of claims 10 to 14, wherein combustion (305) of the working fluid is generated within said annular duct, in particular between said rotor surface and the opposing inner or outer wall, wherein this combustion is preferably initiated upstream from said rotor surface.
